# EUROPEAN PATENT APPLICATION

(11) **EP 4 632 352 A1**
(43) Date of publication of application: **15.10.2025**
(21) Application number: 25161752.8
(22) Date of filing: 05.03.2025
(51) Int. Cl.: G01N 21/3581, H04N 23/56, H04N 23/74

(54) **IMAGING SYSTEM, CONTROL METHOD FOR IMAGING SYSTEM, AND PROGRAM**

(30) Priority: 18.03.2024 JP 2024041952
(71) Applicant: CANON KABUSHIKI KAISHA, Tokyo 146-8501 (JP)
(72) Inventor: HOSONO, Suguru, Tokyo, 146-8501 (JP)
(74) Representative: TBK

(57) **Abstract**

An imaging system (100) includes an illumination unit (120) configured to emit terahertz waves, an imaging unit (130) configured to image a subject irradiated with the terahertz waves, and a control unit (110) configured to control the illumination unit (120) or the imaging unit (130) such that a positional relationship between the illumination unit (120) that irradiates a target area to be imaged by the imaging unit (130) and the imaging unit (130) that images the target area satisfies a predetermined condition, depending on a positional relationship between the target area and the imaging unit.

## Description

### BACKGROUND

### Field

The present invention relates to an imaging system, a control method for an imaging system, and a recording medium.

### Description of the Related Art

In recent years, in order to prevent crimes committed by people with dangerous objects carried concealed, there has been a demand for technology to detect objects carried by people, such as dangerous objects carried by such people. As one technology, an active terahertz system that utilizes terahertz waves is known. In an active terahertz system, a subject is irradiated with terahertz waves and the terahertz waves reflected by the subject are detected by a terahertz camera, thereby performing imaging and inspection. For example, Japanese Patent Laid-Open No. 2021-181925 discloses irradiating a test object with terahertz waves, acquiring a terahertz wave image from the reflected waves, and detecting a concealed object from the acquired image.

Here, for example, when imaging is performed in a case where an illumination unit, an imaging unit, a target area to be imaged, and the like are not fixed, there are cases where a positional relationship between the illumination unit, the imaging unit, and the target area to be imaged is not the same every time imaging is performed. In this case, as in the technology of Japanese Patent Laid-Open No. 2021-181925, when a positional relationship between the illumination unit that irradiates the target area and the imaging unit that images the target area does not change regardless of a positional relationship between the target area and the imaging unit, there are cases where imaging is performed under a positional relationship that has not been determined in advance between the illumination unit and the imaging unit.

### SUMMARY

The present invention in its first aspect provides a imaging system as specified claims 1 to 9. The present invention in its second aspect provides a control method for an imaging system as specified claim 10. The present invention in its third aspect provides a program as specified claim 11. Further features of the present invention will become apparent from the following description of exemplary embodiments with reference to the attached drawings.

### BRIEF DESCRIPTION OF THE DRAWINGS

Fig. 1 is a diagram illustrating an example of a functional configuration of an imaging system.
Fig. 2 is a diagram illustrating a hardware configuration of the imaging system.
Figs. 3A and 3B are schematic diagrams of a usage form of the imaging system.
Fig. 4A is a diagram illustrating an image obtained by imaging a target object with a visible light camera, and Fig. 4B is a diagram illustrating an image obtained by imaging a target object with the imaging system.
Figs. 5A and 5B are diagrams illustrating examples of the arrangement of an illumination unit and an imaging unit in the imaging system.
Figs. 6A and 6B are diagrams illustrating a positional relationship between the illumination unit, the imaging unit, and the target object.
Fig. 7 is a diagram illustrating an illumination unit management table.
Figs. 8A and 8B are flowcharts illustrating a flow of a control process.
Fig. 9 is a diagram illustrating a first modification example of the arrangement of the illumination unit and the imaging unit in the imaging system.
Figs. 10A to 10D are diagrams illustrating a second modification example of the arrangement of the illumination unit and the imaging unit in the imaging system.
Fig. 11 is a diagram illustrating a configuration of an imaging system according to a second embodiment.
Fig. 12 is a diagram illustrating an illumination unit management table according to the second embodiment.
Figs. 13A and 13B are flowcharts illustrating a flow of a control process in the second embodiment.

### DESCRIPTION OF THE EMBODIMENTS

Embodiments of the present invention will be described below with reference to the drawings.

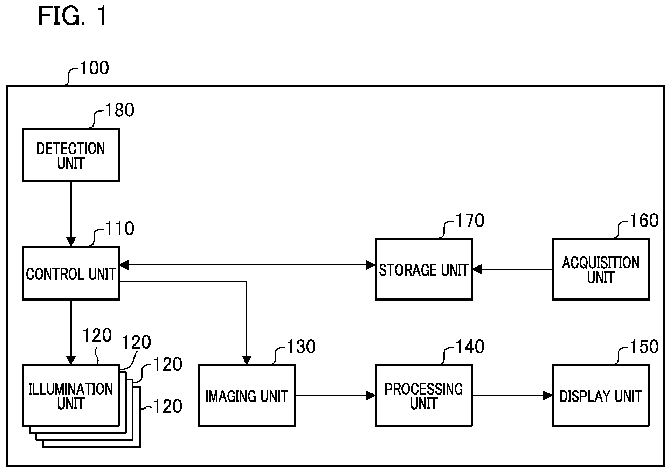

Fig. 1 is a diagram illustrating an example of a functional configuration of an imaging system 100 according to a first embodiment. The imaging system 100 according to the present embodiment is a system that detects reflected light from a subject when terahertz waves are emitted to a target object to be imaged, which is the subject, and detects an object carried by the target object from an image obtained by imaging. Terahertz waves are electromagnetic waves with a frequency of 30 GHz or more and 30 THz or less.

Terahertz waves have different properties from visible light, such as higher linearity and transparency compared to visible light. The imaging system 100 according to the present embodiment detects a target object in a non-destructive and non-contact manner by irradiating the target object to be imaged with terahertz waves and imaging the target object.

In the following description, the target object to be imaged may simply be referred to as the target object. The target object can also be regarded as a target object of inspection by the imaging system 100. In the following description, an area to be imaged by the imaging system 100 may be referred to as a target area. In a situation where the target object is located within a range that is predetermined as an area where imaging is performed, such as when the target object is imaged by the imaging system 100, the target area is the area where the target object is located. In addition, in a situation where the target object is not located within a range that is predetermined as an area where imaging is to be performed, such as when the imaging system 100 is preparing to capture an image, the target area is an area that is predetermined as an area where the target object is located at the time of imaging. The predetermined range and the predetermined area may be an area corresponding to a location provided for imaging, or may be the entire area included in the angle of view of the imaging unit 130, such as the front of the imaging unit 130.

The imaging system 100 includes an illumination unit 120, an imaging unit 130, a processing unit 140, a display unit 150, an acquisition unit 160, a storage unit 170, a detection unit 180, and a control unit 110.

The illumination unit 120 has a light-emitting device (not illustrated) that emits terahertz waves. An example of the light-emitting device is a device equipped with an antenna including a negative differential resistance element and a resonant circuit. Moreover, an example of the negative differential resistance element is a resonant tunneling diode or the like. The light-emitting device may be any of the existing devices as long as it is a device that emits terahertz waves. Furthermore, the illumination unit 120 may be provided with a plurality of light-emitting devices. When a plurality of light-emitting devices are provided in the illumination unit 120, the light emission intensity can be increased by resonantly driving the plurality of light-emitting devices, or the light-emitting devices can be arranged in an array to irradiate the entire target object with terahertz waves. Furthermore, the imaging system 100 according to the present embodiment is provided with a plurality of illumination units 120. In the illustrated example, the imaging system 100 is provided with four illumination units 120. However, the number of illumination units 120 provided in the imaging system 100 is not limited to the example illustrated in the drawing.

The imaging unit 130 detects the intensity of the terahertz waves emitted from the illumination unit 120 and reflected by the target object, thereby imaging the target object. The imaging unit 130 has a detection device that detects terahertz waves. Examples of the detection device include a Schottky barrier diode, a bolometer, and a MEMS resonator. The detection device may be any of the existing devices as long as it is a device that detects terahertz waves.

The processing unit 140 processes an imaging signal obtained by imaging with the imaging unit 130. More specifically, the processing unit 140 converts the imaging signal into an image signal by processes such as demosaic and black level adjustment. Furthermore, the processing unit 140 performs image correction such as defect correction and shading correction when converting the imaging signal. Furthermore, the processing unit 140 may perform image processing such as noise removal and edge extraction, and object recognition through image recognition.

The display unit 150 displays the image processed by the processing unit 140. Furthermore, the display unit 150 may display the results of image recognition performed by the processing unit 140. In addition, when the result of image recognition performed by the processing unit 140 is displayed on the display unit 150, if a predetermined object is image-recognized by the processing unit 140, the recognized object may be displayed on the display unit 150 in an emphasized manner.

The acquisition unit 160 acquires information from an external device of the imaging system 100.

The storage unit 170 stores the information acquired by the acquisition unit 160 and the information input to the imaging system 100. The contents of the information stored in the storage unit 170 will be described in detail later.

The detection unit 180 detects the positional relationship between the illumination unit 120, the imaging unit 130, and the target object. The detection unit 180 may have a distance sensor (not illustrated) that measures a distance, and may use this sensor to measure the distance from the target object to the imaging unit 130 and the distance from the target object to the illumination unit 120, thereby detecting the positional relationship between the illumination unit 120, the imaging unit 130, and the target object. In addition, when the illumination unit 120 emits terahertz waves to a target object, the detection unit 180 may identify a position of the target object, a distance from the target object to the imaging unit 130, and the like, from the intensity of the reflected waves reflected by the target object and detected by the imaging unit 130. In addition, the detection unit 180 may have a position sensor (not illustrated) that detects the two-dimensional or three-dimensional area where an object is located, and may use this position sensor to detect the positional relationship between the illumination unit 120, the imaging unit 130, and the target object. The position sensor may be a sensor that optically detects the area where an object is located, or a sensor that magnetically detects the area where an object is located.

The object to be detected by the detection unit 180 may be determined in advance, or may be any object located in an area that can be detected by the detection unit 180. Furthermore, the detection unit 180 transmits information indicating the detection result to the control unit 110.

The control unit 110 controls the illumination unit 120, the imaging unit 130, and the detection unit 180. When the control unit 110 acquires results of detection by the detection unit 180, the control unit 110 identifies, from the acquired results, which of the plurality of illumination units 120 will cause the reflected wave from the target object to be incident on the detection device of the imaging unit 130 when terahertz waves are emitted to the target object. Then, the identified illumination unit 120 is determined as the illumination unit 120 that irradiates the target object with terahertz waves. The control unit 110 controls switching of the illumination unit 120 between on and off, and controls the intensity or the like of light emitted by terahertz waves when the illumination unit 120 emits the terahertz waves. Examples of the intensity of light emitted by terahertz waves include a luminous intensity of the terahertz waves emitted from the illumination unit 120, a luminous flux of the terahertz waves emitted from the illumination unit 120, and an illuminance of the location where light is emitted by the terahertz waves emitted from the illumination unit 120. The control unit 110 also controls the exposure time, aperture, focus, and the like in the imaging unit 130. Furthermore, the control unit 110 controls whether or not the detection unit 180 is activated.

The processing by the control unit 110 and the processing unit 140 is implemented by a processing device such as a CPU or an ISP. The control unit 110 and the processing unit 140 may be configured by the same processing device, or may be configured by separate processing devices.

In the imaging system 100, the illumination unit 120 and the imaging unit 130 may be provided integrally, or may be provided independently as separate devices. When the illumination unit 120 and the imaging unit 130 are provided integrally, the positional relationship between the illumination unit 120 and the imaging unit 130 may be fixed. Furthermore, when the illumination unit 120 and the imaging unit 130 are provided independently, the positional relationship between the illumination unit 120 and the imaging unit 130 may change by changing the position of one of the illumination unit 120 and the imaging unit 130.

In addition, in the illustrated example, the imaging system 100 is provided with the processing unit 140 and the display unit 150, but the present invention is not limited thereto. The processing unit 140 and the display unit 150 may be provided in an external device of the imaging system 100, and the imaging system 100 may transmit information obtained by imaging with the imaging unit 130 to the processing unit 140 and the display unit 150 via a network. In this case, the network connecting the imaging system 100 with the processing unit 140 and the display unit 150 may be any network configured to enable transmission and reception of information. The network may be the Internet, a LAN, a WAN, a cellular network such as LTE or 5G, a wireless network, a dedicated digital line, Bluetooth (registered trademark), Bluetooth Low Energy, etc., or a combination thereof.

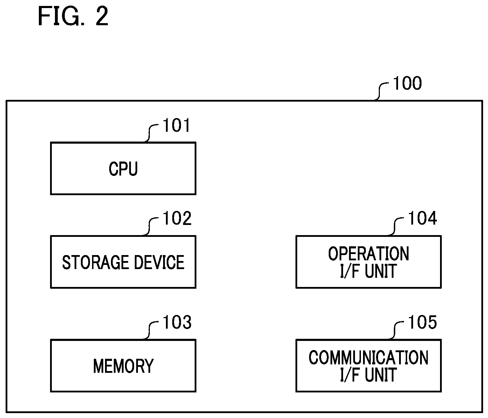

Fig. 2 is a diagram illustrating a hardware configuration of the imaging system 100. The imaging system 100 includes a CPU 101, a storage device 102, a memory 103, an operation I/F unit 104, and a communication I/F unit 105. The CPU 101 controls the entire imaging system 100. The CPU 101 loads a program from the storage device 102 into the memory 103 and executes the program to realize various controls. The storage device 102 stores an operating system (OS), programs, management data, data collected from external systems and devices, and the like. The memory 103 functions as a work area for the CPU 101. The operation I/F unit 104 outputs various types of data and execution results of programs and the like to an output device such as a connected display, and receives an input from a connected input device. The communication I/F unit 105 is a network interface for communicating with external systems and devices. The configuration illustrated in Fig. 2 can also be regarded as the hardware configuration of the control unit 110 in the imaging system 100.

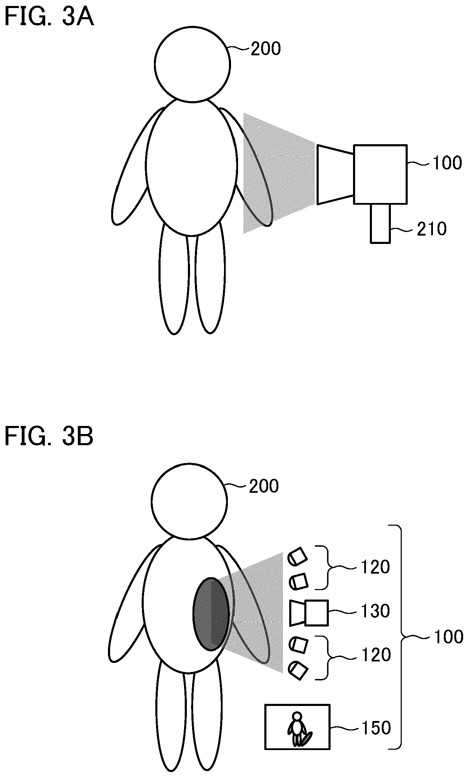

Figs. 3A and 3B are schematic diagrams of a usage form of the imaging system 100. Figs. 3A and 3B illustrate examples in which the imaging system 100 captures an image of a target object 200, which is a person under inspection, and detects an object that the target object 200 is carrying concealed.

Fig. 3A illustrates an example in which the imaging system 100 is provided with a holding unit 210, and an inspector inspecting the target object 200 uses the imaging system 100 by grasping the holding unit 210. An inspector may use the imaging system 100 to prioritize imaging the parts of the target object 200 that are more likely to contain dangerous objects, or may capture an image of the target object 200 such that the entire target object 200 fits within the angle of view of the imaging unit 130. Examples of places where such an imaging system 100 is used include airport security stations and places at event venues where entrants are controlled. The inspector uses the imaging system 100 to detect an object carried concealed by the target object 200, thereby preventing an incident that the target object 200 bringing in a dangerous object is about to cause in advance. The target object 200 is not limited to a person, but may be any object carried, such as a bag, a cardboard box, an envelope, and the like.

As illustrated in Fig. 3B, in the imaging system 100, when at least one of the plurality of illumination units 120 irradiates the target object 200, reflection from the target object 200 is detected by the imaging unit 130. An image obtained based on the result of detection by the imaging unit 130 is then processed by the processing unit 140 and displayed on the display unit 150. The inspector checks the image displayed on the display unit 150 to identify the object carried by the target object 200.

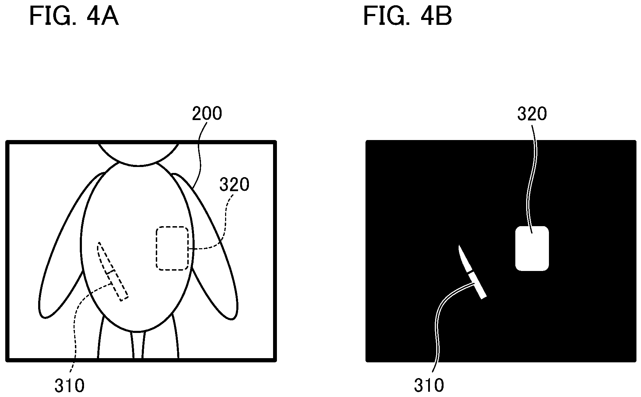

Fig. 4A is a diagram illustrating an image obtained by imaging a target object 200 with a camera (hereinafter referred to as a visible light camera) that performs imaging by detecting reflected waves from the target object 200 when visible light is emitted to the target object 200. Fig. 4B is a diagram illustrating an image obtained by imaging the target object 200 by the imaging system 100 according to the present embodiment. In the examples illustrated in Figs. 4A and 4B, it is assumed that the target object 200 has a knife 310 and a bomb 320 carried concealed inside his/her clothes.

When a visible light camera irradiates the target object 200 with visible light, the visible light is reflected off the clothing worn by the target object 200 before reaching the knife 310 or the bomb 320. In this case, as illustrated in Fig. 4A, the knife 310 and the bomb 320 are not displayed in the image captured by the visible light camera, and it is difficult for an inspector to identify the knife 310 or the bomb 320.

On the other hand, when the imaging system 100 irradiates the target object 200 with terahertz waves, the terahertz waves pass through the clothes of the target object 200 and are reflected by the knife 310 and the bomb 320. In this case, as illustrated in Fig. 4B, the knife 310 and the bomb 320 are displayed in the image captured by the imaging system 100, and an inspector can identify from this image that the target object 200 is carrying the knife 310 or the bomb 320.

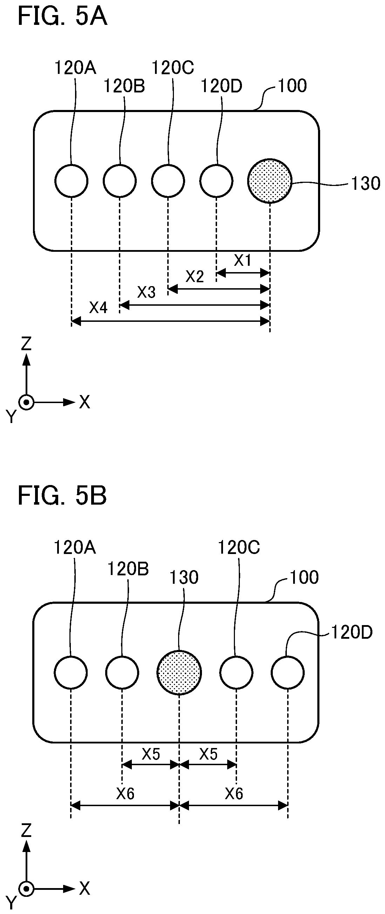

Figs. 5A and 5B are diagrams illustrating examples of the arrangement of the illumination unit 120 and the imaging unit 130 in the imaging system 100. In the following description, the left-right direction in Figs. 5A and 5B may be referred to as an X direction, the front-rear direction in Figs. 5A and 5B may be referred to as a Y direction, and the up-down direction in Figs. 5A and 5B may be referred to as a Z direction. Further, the left side in Figs. 5A and 5B may be referred to as the upstream side in the X direction, and the right side in Figs. 5A and 5B may be referred to as the downstream side in the X direction. Further, the front side in Figs. 5A and 5B may be referred to as the upstream side in the Y direction, and the rear side in Figs. 5A and 5B may be referred to as the downstream side in the Y direction. Further, the lower side in Figs. 5A and 5B may be referred to as the upstream side in the Z direction, and the upper side in Figs. 5A and 5B may be referred to as the downstream side in the Z direction. In the examples illustrated in Figs. 5A and 5B, the direction in which the illumination unit 120 emits light and the direction in which the imaging unit 130 faces the subject are both the Y direction.

In the example illustrated in Fig. 5A, in the imaging system 100, four illumination units 120 and an imaging unit 130 are arranged horizontally in the X direction, and the imaging unit 130 is located to the right of each illumination unit 120. In the following description, the four illumination units 120 will be referred to as a first illumination unit 120A, a second illumination unit 120B, a third illumination unit 120C, and a fourth illumination unit 120D, respectively. Furthermore, when the first illumination unit 120A, the second illumination unit 120B, the third illumination unit 120C, and the fourth illumination unit 120D are described without making any particular distinction between them, they will be simply referred to as illumination units 120.

In the illustrated example, the first illumination unit 120A, the second illumination unit 120B, the third illumination unit 120C, the fourth illumination unit 120D, and the imaging unit 130 are arranged in this order from the upstream side to the downstream side in the X direction. The distance from the imaging unit 130 to the fourth illumination unit 120D is a distance X1. Further, the distance from the imaging unit 130 to the third illumination unit 120C is a distance X2 that is longer than the distance X1. Further, the distance from the imaging unit 130 to the second illumination unit 120B is a distance X3 that is longer than the distance X2. Further, the distance from the imaging unit 130 to the first illumination unit 120A is a distance X4 that is longer than the distance X3.

In the example illustrated in Fig. 5B, in the imaging system 100, four illumination units 120 and an imaging unit 130 are arranged horizontally in the X direction, and two illumination units 120 are located upstream and downstream of the imaging unit 130 in the X direction, respectively. The four illumination units 120 are provided symmetrically with respect to the imaging unit 130. In the illustrated example, the first illumination unit 120A, the second illumination unit 120B, the imaging unit 130, the third illumination unit 120C, and the fourth illumination unit 120D are arranged in this order from the upstream side to the downstream side in the X direction. Moreover, the distance from the imaging unit 130 to the second illumination unit 120B and the distance from the imaging unit 130 to the third illumination unit 120C are both a distance X5. Further, the distance from the imaging unit 130 to the first illumination unit 120A and the distance from the imaging unit 130 to the fourth illumination unit 120D are both a distance X6 that is longer than the distance X5.

In the examples illustrated in Figs. 5A and 5B, in any case, the positions of the four illumination units 120 and the imaging unit 130 are aligned in the Y direction and in the Z direction.

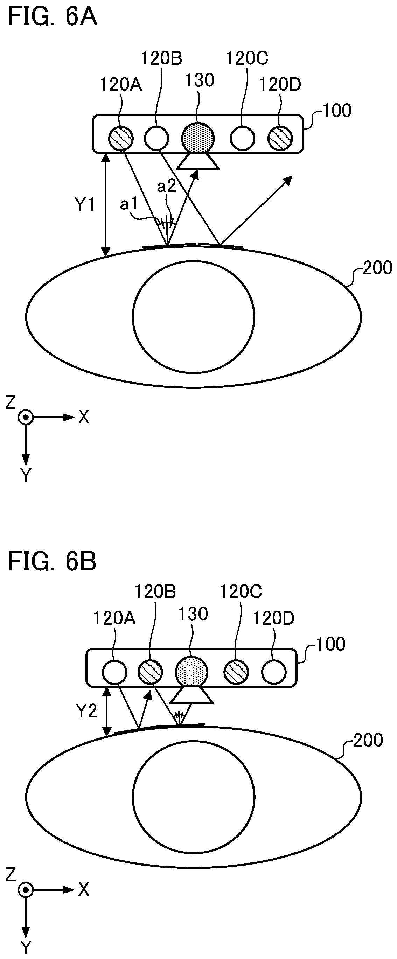

Figs. 6A and 6B are diagrams illustrating a positional relationship between the illumination unit 120, the imaging unit 130, and the target object 200. Figs. 6A and 6B are diagrams of the imaging system 100 and the target object 200 as viewed from above the imaging system 100 and the target object 200 (upstream side in the Z direction). The X, Y, and Z directions in Figs. 6A and 6B correspond to the X, Y, and Z directions in Figs. 5A and 5B, respectively. Moreover, it is assumed that the imaging system 100 illustrated in Figs. 6A and 6B is the imaging system 100 illustrated in Fig. 5B. In addition, in Figs. 6A and 6B, it is assumed that a target object 200 has a shape that is symmetrical in the X direction with respect to a position that overlaps with the center of the imaging unit 130. In addition, in the imaging system 100 illustrated in Figs. 6A and 6B, it is assumed that the direction in which each illumination unit 120 emits the terahertz wave is determined in advance. More specifically, the first illumination unit 120A and the second illumination unit 120B emit terahertz waves toward the downstream side in the Y direction and the downstream side in the X direction, and the third illumination unit 120C and the fourth illumination unit 120D emit terahertz waves toward the downstream side in the Y direction and the upstream side in the X direction.

In the example illustrated in Fig. 6A, it is assumed that the distance from each of the illumination units 120 and the imaging unit 130 to the target object 200 (the distance in the Y direction) is a distance Y1. Here, when the first illumination unit 120A emits terahertz waves, the emitted terahertz waves are reflected by the target object 200. In this case, an incident angle a1 and a reflection angle a2 of the terahertz wave with respect to the target object 200 are equal. Additionally, since terahertz waves have higher linearity compared to visible light and the like, when the illumination unit 120 emits terahertz waves, specular reflection occurs in which the incident angle and the reflection angle are equal. Furthermore, since terahertz waves are less prone to diffuse reflection compared to visible light and the like, in order to capture images using terahertz waves, the detection device of the imaging unit 130 needs to detect specularly reflected terahertz waves. In the following description, when a reflected terahertz wave is described, it is assumed that the terahertz wave is a specularly reflected terahertz wave.

In the example illustrated in Fig. 6A, the terahertz waves emitted from the first illumination unit 120A and reflected by the target object 200 are incident on the detection device of the imaging unit 130. On the other hand, when the second illumination unit 120B emits terahertz waves, the emitted terahertz waves pass downstream in the X direction from the imaging unit 130 after being reflected by the target object 200, and therefore are not incident on the detection device of the imaging unit 130.

In this case, the first illumination unit 120A and the imaging unit 130 are in a positional relationship in which the terahertz waves emitted from the illumination unit 120 and reflected by the target object 200 are detected by the detection device of the imaging unit 130. On the other hand, the second illumination unit 120B and the imaging unit 130 are not in a positional relationship in which the terahertz waves emitted from the illumination unit 120 and reflected by the target object 200 are detected by the detection device of the imaging unit 130. Therefore, it is preferable that the control unit 110 causes the first illumination unit 120A to irradiate the target object 200 with terahertz waves, but does not cause the second illumination unit 120B to irradiate the target object 200 with terahertz waves.

Although not illustrated, the third illumination unit 120C and the imaging unit 130 are not in a positional relationship in which the terahertz waves emitted from the illumination unit 120 and reflected by the target object 200 are detected by the detection device of the imaging unit 130. On the other hand, the fourth illumination unit 120D and the imaging unit 130 are in a positional relationship in which the terahertz waves emitted from the illumination unit 120 and reflected by the target object 200 are detected by the detection device of the imaging unit 130. Therefore, it is preferable that the control unit 110 does not cause the third illumination unit 120C to irradiate the target object 200 with terahertz waves, but causes the fourth illumination unit 120D to irradiate the target object 200 with terahertz waves.

In the example illustrated in Fig. 6B, it is assumed that the distance from each of the illumination units 120 and the imaging unit 130 to the target object 200 (the distance in the Y direction) is a distance Y2 that is shorter than the distance Y1. Here, when the first illumination unit 120A emits terahertz waves, the emitted terahertz waves pass upstream in the X direction from the imaging unit 130 after being reflected by the target object 200, and therefore are not incident on the detection device of the imaging unit 130. Additionally, in the example illustrated in Fig. 6B, the distance from each of the illumination units 120 and the imaging unit 130 to the target object 200 is shorter than in the example illustrated in Fig. 6A. Accordingly, the location at which the terahertz waves emitted from first illumination unit 120A and reflected by the target object 200 are incident on the imaging system 100 changes. Furthermore, when the second illumination unit 120B emits terahertz waves, the emitted terahertz waves are reflected by the target object 200 and then incident on the detection device of the imaging unit 130.

In this case, the first illumination unit 120A and the imaging unit 130 are not in a positional relationship in which the terahertz waves emitted from the illumination unit 120 and reflected by the target object 200 are detected by the detection device of the imaging unit 130. On the other hand, the second illumination unit 120B and the imaging unit 130 are in a positional relationship in which the terahertz waves emitted from the illumination unit 120 and reflected by the target object 200 are detected by the detection device of the imaging unit 130. Therefore, it is preferable that the control unit 110 does not cause the first illumination unit 120A to irradiate the target object 200 with terahertz waves, but causes the second illumination unit 120B to irradiate the target object 200 with terahertz waves.

Although not illustrated, the third illumination unit 120C and the imaging unit 130 are in a positional relationship in which the terahertz waves emitted from the illumination unit 120 and reflected by the target object 200 are detected by the detection device of the imaging unit 130. On the other hand, the fourth illumination unit 120D and the imaging unit 130 are not in a positional relationship in which the terahertz waves emitted from the illumination unit 120 and reflected by the target object 200 are detected by the detection device of the imaging unit 130. Therefore, it is preferable that the control unit 110 causes the third illumination unit 120C to irradiate the target object 200 with terahertz waves, but does not cause the fourth illumination unit 120D to irradiate the target object 200 with terahertz waves.

In this way, when the target object 200 is irradiated by any one of the plurality of illumination units 120, whether the terahertz waves reflected by the target object 200 are incident on the detection device of the imaging unit 130 may differ depending on the positional relationship between the imaging system 100 and the target object 200. Therefore, in the present embodiment, the control unit 110 determines which of the plurality of illumination units 120 is to emit terahertz waves, depending on the positional relationship between the imaging system 100 and the target object 200.

In the examples illustrated in Figs. 6A and 6B, it is assumed that the terahertz waves incident on the target object 200 from the illumination unit 120 and the terahertz waves reflected by the target object 200 both travel perpendicular to the Z direction, in other words, horizontally to the X and Y directions. On the other hand, there are cases where the terahertz waves from the illumination unit 120 are emitted in a direction that is not horizontal to any of the X, Y, and Z directions. In this case, the control unit 110 determines which of the plurality of illumination units 120 is to emit terahertz waves, depending on the positional relationship between the illumination unit 120, the imaging unit 130, and the target object 200 in a three-dimensional area defined by coordinates in the X, Y, and Z directions.

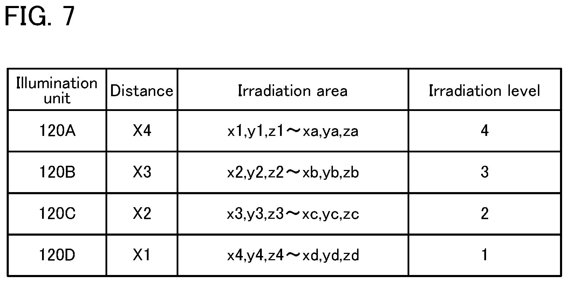

Fig. 7 is a diagram illustrating an illumination unit management table. The illumination unit management table is a table for managing irradiation by the illumination unit 120. The illumination unit management table is stored in the storage unit 170 of the imaging system 100 (see Fig. 1). Also, it is assumed that the illumination unit management table illustrated in Fig. 7 indicates information targeted at the illumination unit 120 illustrated in Fig. 5A.

The contents of the illumination unit management table will be described in detail.

The "illumination unit" is information that identifies the target illumination unit 120 in the imaging system 100. In the illustrated example, "illumination unit" is indicated as either "120A," "120B," "120C," or "120D," thereby identifying which of the first illumination unit 120A to the fourth illumination unit 120D the information indicated in the illumination unit management table is targeted for.

The "distance" is the distance from the illumination unit 120 to the imaging unit 130.

The "irradiation area" is a target area where irradiation conditions are satisfied. The irradiation conditions are predetermined conditions regarding the positional relationship between the illumination unit 120 and the imaging unit 130. The irradiation conditions are used by the control unit 110 to determine from which illumination unit 120 the target object is to be irradiated with terahertz waves. In the present embodiment, that the illumination unit 120 and the imaging unit 130 have a specific positional relationship is defined as the irradiation condition. The specific positional relationship is a positional relationship between the illumination unit 120 and the imaging unit 130 in which the terahertz waves emitted from the illumination unit 120 and reflected by the target object are incident on the detection device of the imaging unit 130. In the illustrated example, the "irradiation area" shows the target area where the irradiation conditions are satisfied as a three-dimensional area range defined by coordinates in the X, Y, and Z directions.

The "irradiation level" shows an index indicating the intensity of light emitted by the terahertz waves emitted from the illumination unit 120. A larger value shown in the "irradiation level" refers to a higher intensity of light emitted by the terahertz waves emitted from the illumination unit 120. Also, as illustrated in the drawing, the greater the distance from the imaging unit 130 to the "illumination unit," the higher the "irradiation level" associated with it.

An example of the contents written in the illumination unit management table will be described. The first illumination unit 120A, "120A," is associated with "X4" as the "distance," "x1, y1, z1 to xa, ya, za" as the "irradiation area," and "4" as the "irradiation level."

The information shown in the illumination unit management table may be information input to the imaging system 100 by a user of the imaging system 100, or may be information identified by the control unit 110.

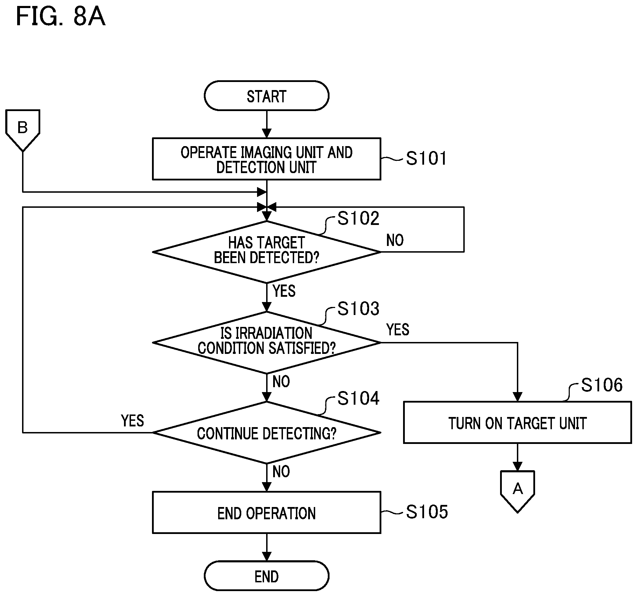

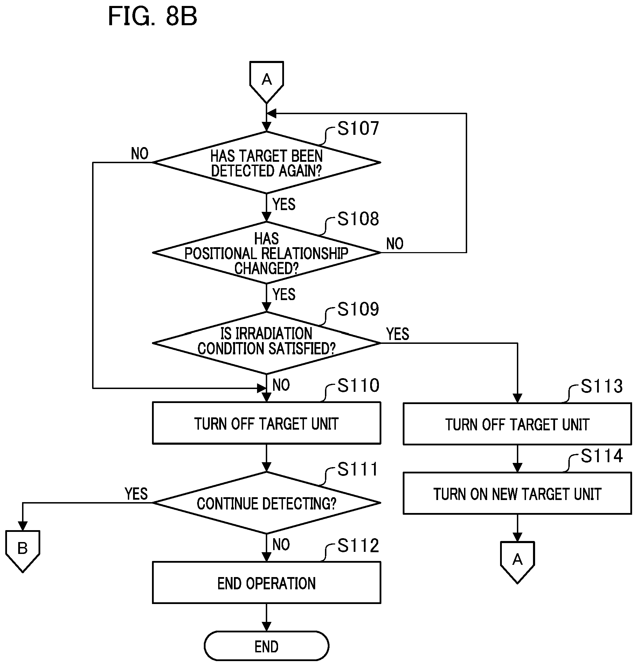

Figs. 8A and 8B are flowcharts illustrating a flow of a control process. The control process is a process in which the control unit 110 of the imaging system 100 controls the illumination unit 120 and the imaging unit 130. In the present embodiment, for example, a user of the imaging system 100, such as an inspector, operates an operation unit (not illustrated) of the imaging system 100 to start the control process. Also, for example, the control process may be started when the imaging system 100 is powered on. In the present embodiment, the CPU 101 (see Fig. 2) loads a program stored in the storage device 102 into the memory 103 and executes the program, thereby implementing each process in the control process.

The control unit 110 operates the imaging unit 130 and the detection unit 180 (step (hereinafter sometimes referred to as "S") 101). More specifically, the control unit 110 puts the imaging unit 130 in a state in which it is possible to capture images, and causes the detection unit 180 to detect a target object.

The control unit 110 determines whether or not the detection unit 180 has detected a target object (S102). Examples of a case where the target object is not detected by the detection unit 180 include a case where the target object is not present within a range where the detection unit 180 can detect it. While the negative result remains in step 102, the control unit 110 repeats the process of step 102.

When the control unit 110 determines that the detection unit 180 has detected a target object (Yes in S102), the control unit 110 determines, for each illumination unit 120, whether or not the positional relationship between the illumination unit 120 and the imaging unit 130 satisfies the irradiation condition (S103). The control unit 110 determines whether or not the positional relationship between the illumination unit 120 and the imaging unit 130 satisfies the irradiation condition depending on whether or not the target area is included in the range of the area shown in the "irradiation area" in the illumination unit management table. In this case, the target area is an area detected by the detection unit 180 as an area where the target object is located.

When the control unit 110 determines that the positional relationship between the illumination unit 120 and the imaging unit 130 for any of the illumination units 120 does not satisfy the irradiation condition (No in S103), the control unit 110 determines whether or not to cause the detection unit 180 to continue detecting the target object (S104). In this case, information indicating that the irradiation condition is not satisfied and information for selecting whether or not to cause the detection unit 180 to continue detecting the target object may be displayed on the display unit 150 (see Fig. 1). Then, in response to an operation of an operation unit (not illustrated) of the imaging system 100 by a user, the control unit 110 may determine whether or not to cause the detection unit 180 to continue detecting the target object.

When the control unit 110 determines not to cause the detection unit 180 to continue detecting the target object (No in S104), the control unit 110 ends the operation of the imaging unit 130 and the detection unit 180 (S105), and the control process ends. More specifically, the control unit 110 puts the imaging unit 130 in a state in which it is not possible to capture images, and puts the detection unit 180 in a state in which it is not possible to detect a target object.

Furthermore, when the control unit 110 determines to cause the detection unit 180 to continue detecting the target object (Yes in S104), the process from step 102 is performed again.

In addition, when the control unit 110 determines that the positional relationship between the illumination unit 120 and the imaging unit 130 for any of the illumination units 120 satisfies the irradiation condition (Yes in S103), the control unit 110 turns ON the target illumination unit 120 that satisfies the irradiation condition (S106). More specifically, the control unit 110 causes the illumination unit 120 among the plurality of illumination units 120 that is located at a position that satisfies the irradiation condition to emit terahertz waves. As a result, the terahertz waves emitted from the target illumination unit 120 that satisfies the irradiation condition and reflected by the target object are incident on the detection device of the imaging unit 130, and at this time the imaging unit 130 images the target object, thereby obtaining an image showing the object carried by the target object. At this time, the control unit 110 controls the intensity of the light emitted by the terahertz waves emitted from the illumination unit 120 according to the distance from the illumination unit 120 located at a position that satisfies the irradiation condition to the imaging unit 130. More specifically, the control unit 110 causes the illumination unit 120 located at a position that satisfies the irradiation condition to emit terahertz waves at the "irradiation level" defined for the illumination unit 120 in the illumination unit management table (see Fig. 7). The target illumination unit 120 that satisfies the irradiation condition may be referred to as a target unit.

Furthermore, when there are a plurality of illumination units 120 located at positions that satisfy the irradiation condition, the control unit 110 causes all illumination units 120 that satisfy the irradiation condition to emit terahertz waves.

The control unit 110 determines whether or not the detection unit 180 has detected the target object again (S107). More specifically, the control unit 110 causes the detection unit 180 to detect the target object again, and determines whether or not the target object has been detected by the detection unit 180 again.

When the target object has been detected again by the detection unit 180 (Yes in S107), the control unit 110 determines whether or not the positional relationship between the target unit, the imaging unit 130, and the target object has changed (S108). The control unit 110 determines whether or not the positional relationship has changed based on whether or not the area detected by the detection unit 180 as the area where the target object is located is no longer included in the range of the area shown in the "irradiation area" of the illumination unit management table for the illumination unit 120, which is the target unit.

When the control unit 110 determines that the positional relationship between the target unit, the imaging unit 130, and the target object has not changed (No in S108), the processes from step 107 are repeated.

In addition, when the control unit 110 determines that the positional relationship between the target unit, the imaging unit 130, and the target object has changed (Yes in S108), the control unit 110 determines, for each illumination unit 120, whether or not the positional relationship between the illumination unit 120 and the imaging unit 130 satisfies the irradiation condition (S109).

When a negative result is obtained in step 107 or step 109, the control unit 110 turns OFF the target unit that was turned ON in step 106 (S110). More specifically, the control unit 110 ends emission of terahertz waves by the illumination unit 120, which has been emitting terahertz waves in step 106.

The control unit 110 determines whether or not to cause the detection unit 180 to continue detecting the target object (S111). When the control unit 110 determines not to cause the detection unit 180 to continue detecting the target object (No in S111), the control unit 110 ends the operation of the imaging unit 130 and the detection unit 180 (S112), and the control process ends. The process in step 111 and the process in step 112 are the same as the process in step 104 and the process in step 105, respectively.

Furthermore, when the control unit 110 determines to cause the detection unit 180 to continue detecting the target object (Yes in S111), the process from S102 is performed again.

In addition, when the control unit 110 determines that the positional relationship between the illumination unit 120 and the imaging unit 130 for any of the illumination units 120 satisfies the irradiation condition (Yes in S109), the control unit 110 turns OFF the target unit that was turned ON in step 106 (S113). The process in step 113 is the same as the process in step 110.

The control unit 110 turns ON the target unit that newly satisfies the irradiation condition (S114). More specifically, the control unit 110 causes the illumination unit 120 among the plurality of illumination units 120 that is located at a position that newly satisfies the irradiation condition to emit terahertz waves. As a result, even if the positional relationship between the illumination unit 120, the imaging unit 130, and the target object changes, the terahertz waves emitted from the new illumination unit 120 and reflected by the target object are incident on the imaging unit 130. After step 114, the processes from step 107 are repeated.

As described above, the control unit 110 controls the illumination unit 120 such that the positional relationship between the illumination unit 120 that irradiates the target area and the imaging unit 130 that images the target area satisfies the irradiation condition, depending on the positional relationship between the target area to be imaged by the imaging unit 130 and the imaging unit 130.

In this case, even if the positional relationship between the illumination unit 120, the imaging unit 130, and the target area is not the same each time imaging is performed, it is possible to realize imaging under a positional relationship that satisfies the irradiation condition between the illumination unit 120 that irradiates the target area and the imaging unit 130 that images the target area.

Furthermore, in the present embodiment, the illumination unit 120 includes a plurality of illumination units 120 at different positions, and the control unit 110 causes an illumination unit 120 among the plurality of illumination units 120 that is located at a position where the irradiation condition is satisfied to irradiate the target area. In this case, the power consumed by the illumination unit 120 can be reduced compared to when the terahertz waves are emitted from the illumination unit 120 located at a position where the irradiation condition is not satisfied.

In addition, when the positional relationship between the target area and the imaging unit 130 changes, the control unit 110 controls the illumination unit 120 such that the irradiation condition is satisfied after the change (see steps 109 to 114 in Fig. 8B). In this case, even if the positional relationship between the illumination unit 120, the imaging unit 130, and the target area changes, it is possible to realize imaging under a positional relationship that satisfies the irradiation condition between the illumination unit 120 that irradiates the target area and the imaging unit 130 that images the target area.

In addition, when the positional relationship between any of the illumination units 120 and the imaging unit 130 does not satisfy the irradiation condition, the control unit 110 controls a specific illumination unit 120 such that the positional relationship between the specific illumination unit 120 that has not irradiated the target area and the imaging unit 130 satisfies the irradiation condition. An example of the specific illumination unit 120 is the illumination unit 120 that newly emits terahertz waves in step 114 of the control process (see Fig. 8B).

In this case, even if the positional relationship between any of the illumination units 120 and the imaging unit 130 does not satisfy the irradiation condition, it is possible to realize imaging under a positional relationship that satisfies the irradiation condition between the illumination unit 120 that irradiates the target area and the imaging unit 130 that images the target area.

The positional relationship between the illumination unit 120 and the imaging unit 130 that satisfies the irradiation condition is determined by the area where the illumination unit 120 is located, the area where the imaging unit 130 is located, and the target area. Therefore, the irradiation conditions can also be understood as conditions that are determined regarding the positional relationship between the illumination unit 120, the imaging unit 130, and the target area.

In addition, in the present embodiment, the positional relationship that satisfies the irradiation condition is determined as a relationship between areas in three dimensions, but the present invention is not limited thereto.

In the imaging system 100, each of the illumination units 120, the imaging unit 130, and the target area may be located in a two-dimensional area (in the examples illustrated in Figs. 5A and 5B, the two-dimensional area defined by coordinates in the X and Y directions) as illustrated in Figs. 5A and 5B. In this case, the positional relationship that satisfies the irradiation condition may be determined as a relationship between areas in two dimensions. An example of the relationship between areas in two dimensions is the relationship of the distance from the imaging unit 130 to the target area.

An example will be described in which the positional relationship that satisfies the irradiation condition is determined as the relationship of the distance from the imaging unit 130 to the target area. As illustrated in Figs. 6A and 6B, the shorter the distance from the imaging unit 130 to the target area, the shorter the distance from the imaging unit 130 to the illumination unit 120 located at a position where the irradiation condition is satisfied. Therefore, according to the distance from the illumination unit 120 to the imaging unit 130, the distance from the imaging unit 130 to the target area may be determined as the positional relationship that satisfies the irradiation condition. In this case, in the illumination unit management table (see Fig. 7), for each "illumination unit," the range of distances from the imaging unit 130 to the target area as the distance at which the irradiation condition is satisfied may be shown in the "irradiation area" according to the "distance" from the illumination unit 120 to the imaging unit 130. Then, in the control process (see Figs. 8A and 8B), the control unit 110 may determine that the "illumination unit" associated with the "irradiation area" including the distance from the imaging unit 130 to the target object 200 is the illumination unit 120 located at a position where the irradiation condition is satisfied.

Furthermore, the positional relationship that satisfies the irradiation condition is not limited to the relationship of the distance from the imaging unit 130 to the target area. As in the examples illustrated in Figs. 6A and 6B, there are cases where the difference between the distance from the illumination unit 120 to the target area and the distance from the imaging unit 130 to the target area is small. Therefore, the distance from the illumination unit 120 to the target area may be determined as the positional relationship that satisfies the irradiation condition. Furthermore, the distance from the imaging system 100 to the target area may be determined as the positional relationship that satisfies the irradiation condition.

As described above, in the present embodiment, the plurality of illumination units 120 include a first illumination unit 120 whose distance to the imaging unit 130 is a first distance, and a second illumination unit 120 whose distance to the imaging unit 130 is longer than the first distance. The target area includes a first target area whose distance to the imaging unit 130 is a second distance, and a second target area whose distance to the imaging unit 130 is longer than the second distance. Then, the control unit 110 causes the first illumination unit 120 to emit terahertz waves when the target area is the first target area, and causes the second illumination unit 120 to emit terahertz waves when the target area is the second target area. An example of the first distance is the distance X5 (see Fig. 5B). Moreover, examples of the first illumination unit 120 include the second illumination unit 120B and the third illumination unit 120C in the example illustrated in Fig. 5B. Moreover, examples of the second illumination unit 120 include the first illumination unit 120A and the fourth illumination unit 120D in the example illustrated in Fig. 5B. Moreover, an example of the second distance is the distance Y2 (see Fig. 6B). Moreover, an example of the first target area is the area where the target object 200 is located in the example illustrated in Fig. 6B. Moreover, an example of the second target area is the area where the target object 200 is located in the example illustrated in Fig. 6A. In this case, even if the distance from the imaging unit 130 to the target area is not the same each time imaging is performed, imaging is performed under a positional relationship between the illumination unit 120 and the imaging unit 130 that satisfies the irradiation condition between the illumination unit 120 that irradiates the target area and the imaging unit 130 that images the target area.

In addition, the control unit 110 controls the intensity of the light emitted by the terahertz waves to be higher when the illumination unit 120 irradiates the second target area with the terahertz waves than when the illumination unit 120 irradiates the first target area with the terahertz waves. In this case, unevenness in the accuracy of the images obtained by imaging is suppressed compared to when the intensity of the light emitted by the terahertz waves is the same regardless of the distance from the illumination unit 120 that emits the terahertz waves to the imaging unit 130.

Furthermore, the plurality of illumination units 120 and the imaging unit 130 are provided along one direction. In this case, it becomes easier to associate the illumination unit 120 that satisfies the irradiation condition depending on the positional relationship between the imaging unit 130 and the target area.

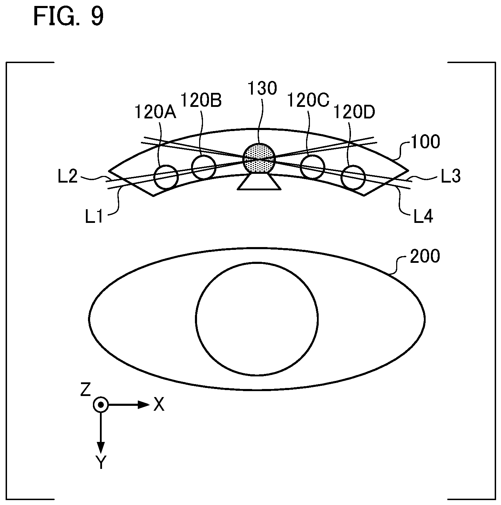

Fig. 9 is a diagram illustrating a first modification example of the arrangement of the illumination unit 120 and the imaging unit 130 in the imaging system 100. Fig. 9 is a diagram of the imaging system 100 and the target object 200 as viewed from above the imaging system 100 and the target object 200 (upstream side in the Z direction). The X, Y, and Z directions in Fig. 9 correspond to the X, Y, and Z directions in Figs. 5A and 5B, respectively.

The arrangement of the illumination unit 120 and the imaging unit 130 illustrated in Fig. 9 is common to the arrangement illustrated in Fig. 6B in that the imaging unit 130 is sandwiched between the first illumination unit 120A and the second illumination unit 120B, and the third illumination unit 120C and the fourth illumination unit 120D in the X direction. On the other hand, the arrangement of the illumination unit 120 and the imaging unit 130 illustrated in Fig. 9 differs from the arrangement illustrated in Fig. 6B in terms of the positional relationship between the illumination unit 120 and the imaging unit 130 in the Y direction. More specifically, in the example illustrated in Fig. 9, the second illumination unit 120B and the third illumination unit 120C are located downstream of the imaging unit 130 in the Y direction. Moreover, the first illumination unit 120A and the fourth illumination unit 120D are located downstream of the second illumination unit 120B and the third illumination unit 120C in the Y direction.

Here, the first illumination unit 120A, the second illumination unit 120B, the third illumination unit 120C, and the fourth illumination unit 120D are not provided on a straight line with respect to the imaging unit 130. In other words, a straight line L1 passing through the first illumination unit 120A and the imaging unit 130, a straight line L2 passing through the second illumination unit 120B and the imaging unit 130, a straight line L3 passing through the third illumination unit 120C and the imaging unit 130, and a straight line L4 passing through the fourth illumination unit 120D and the imaging unit 130 all intersect. Note that the straight line passing through the illumination unit 120 and the imaging unit 130 means a straight line passing through the center of the illumination unit 120 and the center of the imaging unit 130.

As described above, in the example illustrated in Fig. 9, the plurality of illumination units 120 include a first illumination unit 120 and a second illumination unit 120, and the second illumination unit 120 is provided at a position different from a straight line passing through the first illumination unit 120 and the imaging unit 130. The first illumination unit 120 is any one of the four illumination units 120 illustrated in Fig. 9. Moreover, the second illumination unit 120 is an illumination unit 120 different from the first illumination unit 120 among the illumination units 120 illustrated in Fig. 9.

In this case, it is possible to realize emission of the illumination unit 120 corresponding to the target object 200 that does not have a linear shape. In particular, in the example illustrated in Fig. 9, the distance between each illumination unit 120 and the target object 200 is shortened by the extent of the arrangement of the illumination units 120 corresponding to the shape of the person, which is the target object 200, and the accuracy of imaging by the imaging system 100 is improved. Furthermore, when the plurality of illumination units 120 are provided in an arc shape as illustrated in Fig. 9, this contributes to a smaller size of the imaging system 100 compared to when the plurality of illumination units 120 are arranged in a straight line.

Although not illustrated, in the example illustrated in Figs. 5A and 5B, the first illumination unit 120A, the second illumination unit 120B, the third illumination unit 120C, and the fourth illumination unit 120D are provided on a straight line with respect to the imaging unit 130. In other words, none of the straight line passing through the first illumination unit 120A and the imaging unit 130, the straight line passing through the second illumination unit 120B and the imaging unit 130, the straight line passing through the third illumination unit 120C and the imaging unit 130, and the straight line passing through the fourth illumination unit 120D and the imaging unit 130 intersects.

Each of the illumination units 120 illustrated in Fig. 9 is provided to be arranged in sequence in the X direction. That is, the plurality of illumination units 120 and the imaging unit 130 illustrated in Fig. 9 can be regarded as an example of being provided along one direction.

In the examples illustrated in Figs. 5A, 5B, and 9, all of the illumination units 120 provided in the imaging system 100 are provided along one direction, but the present invention is not limited thereto. As long as at least two of the illumination units 120 among the illumination units 120 provided in the imaging system 100 and the imaging unit 130 are provided along one direction, the other illumination units 120 may be provided without being provided along one direction.

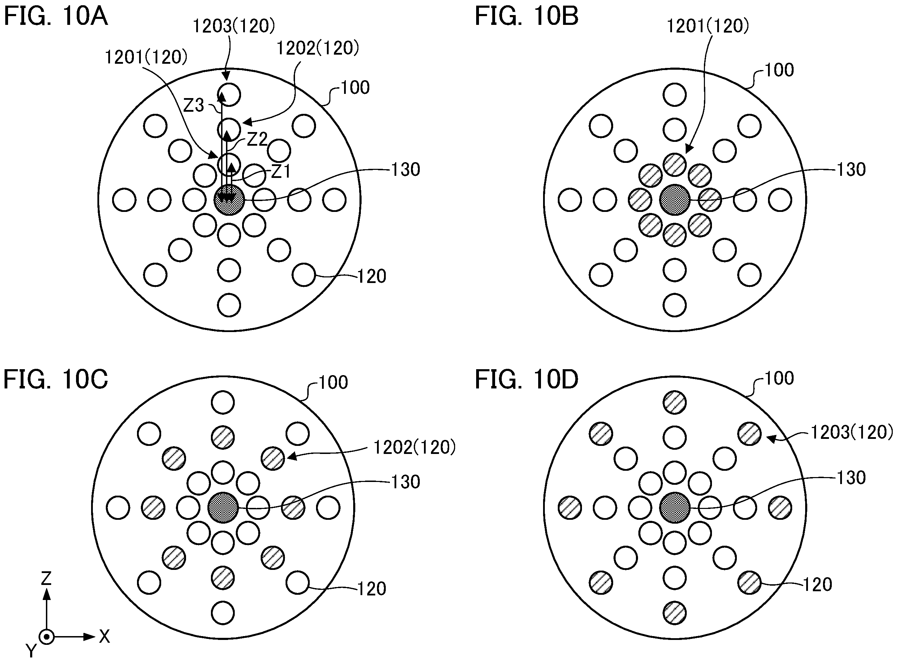

Figs. 10A to 10D are diagrams illustrating a second modification example of the arrangement of the illumination unit 120 and the imaging unit 130 in the imaging system 100. Figs. 10A to 10D are diagrams of the imaging system 100 as viewed from the upstream side of the imaging system 100 in the Y direction. The X, Y, and Z directions in Figs. 10A to 10D correspond to the X, Y, and Z directions in Figs. 5A and 5B, respectively. In the example illustrated in Fig. 10A, the imaging system 100 is provided with a plurality of groups of illumination units 120 that are divided according to the distance from the imaging unit 130 to the illumination units 120. More specifically, the imaging system 100 is provided with a first group of illumination units 1201, a second group of illumination units 1202, and a third group of illumination units 1203. The illumination units 120 belonging to the first group of illumination units 1201 are the illumination units 120 located at a distance Z1 from the imaging unit 130. Moreover, the illumination units 120 belonging to the second group of illumination units 1202 are the illumination units 120 located at a distance Z2 from the imaging unit 130 that is longer than the distance Z1. Moreover, the illumination units 120 belonging to the third group of illumination units 1203 are the illumination units 120 located at a distance Z3 from the imaging unit 130 that is longer than the distance Z2. Eight illumination units 120 arranged at equal intervals in the circumferential direction of the imaging unit 130 belong to each group. Furthermore, the positions of the imaging unit 130 and each of the illumination units 120 are aligned in the Y direction.

Here, for example, when the distance from the imaging system 100 to the target area is relatively short, the control unit 110 causes each of the illumination units 120 belonging to the first group of illumination units 1201 to emit terahertz waves, as illustrated in Fig. 10B. When the illumination unit 120 located at a position where the irradiation condition is satisfied is the first group of illumination units 1201, the assumption is that the target area is an area upstream or downstream of the imaging system 100 in the Y direction. In addition, there may be a case where the area is between the imaging unit 130 and the first group of illumination units 1201 in the X direction or the Z direction.

Furthermore, for example, when the distance from the imaging system 100 to the target object is relatively long, the control unit 110 causes each of the illumination units 120 belonging to the second group of illumination units 1202 to emit terahertz waves, as illustrated in Fig. 10C. When the illumination unit 120 located at a position where the irradiation condition is satisfied is the second group of illumination units 1202, the assumption is that the target area is farther away from the imaging system 100 than when the first group of illumination units 1201 emits terahertz waves. In addition, the target area may be an area upstream or downstream of the imaging system 100 in the Y direction, and an area between the imaging unit 130 and the second group of illumination units 1202 in the X direction or the Z direction.

Furthermore, for example, when the distance from the imaging system 100 to the target object is even longer, the control unit 110 causes each of the illumination units 120 belonging to the third group of illumination units 1203 to emit terahertz waves, as illustrated in Fig. 10D. When the illumination unit 120 located at a position where the irradiation condition is satisfied is the third group of illumination units 1203, the assumption is that the target area is farther away from the imaging system 100 than when the second group of illumination units 1202 emits terahertz waves. In addition, the target area may be an area upstream or downstream of the imaging system 100 in the Y direction, and an area between the imaging unit 130 and the third group of illumination units 1203 in the X direction or the Z direction.

As described above, in the examples illustrated in Figs. 10A to 10D, each of the plurality of illumination units 120 belongs to any one of the plurality of groups divided according to the distance from the imaging unit 130 to the illumination unit 120. Then, the control unit 110 causes the illumination units 120 belonging to the group among the plurality of groups that is located at a position where the irradiation condition is satisfied to emit terahertz waves. In this case, the accuracy of imaging is improved compared to a configuration in which terahertz waves are emitted only from a single illumination unit 120.

In particular, in the examples illustrated in Figs. 10A to 10D, the illumination units 120 of each group are provided to surround the imaging unit 130. In this case, the target object can be irradiated with terahertz waves from various angles, making it easier to obtain an image showing an object carried by the target object regardless of the orientation of the target object.

In the description of the present embodiment, the control unit 110 performs control such that terahertz waves are not emitted from the illumination unit 120 located at a position where the irradiation condition is not satisfied, but the present invention is not limited thereto. For example, the control unit 110 may perform control such that terahertz waves are emitted from an illumination unit 120 that is closer to the imaging unit 130 than an illumination unit 120 that is located at a position where the irradiation condition is satisfied.

Furthermore, the illumination unit 120 may be capable of changing the area to which the terahertz waves are emitted. In this case, for each area to which the illumination unit 120 can emit terahertz waves, a target area where the irradiation condition is satisfied may be indicated in the "irradiation area" of the illumination unit management table (see Fig. 7). Furthermore, the target areas for which the irradiation conditions are satisfied in the plurality of illumination units 120 may at least partially overlap, or the target areas for which the irradiation conditions are satisfied may not overlap.

Furthermore, the configuration for realizing emission of terahertz waves from the illumination unit 120 under a positional relationship between the illumination unit 120 and the imaging unit 130 that satisfies the irradiation condition is not limited to the above-mentioned example.

The imaging system 100 may be provided with a plurality of imaging units 130 each located at a different position. The control unit 110 determines, from among the plurality of imaging units 130, the imaging unit 130 located in the area where the irradiation condition is satisfied, as the imaging unit 130 to be used to image the target area. Then, the control unit 110 causes the illumination unit 120 located in the area where the irradiation condition is satisfied to emit the terahertz wave, and causes the imaging unit 130 located in the area where the irradiation condition is satisfied to image the target object. That is, the control unit 110 may control the imaging unit 130 such that the positional relationship between the illumination unit 120 and the imaging unit 130 satisfies the irradiation conditions, depending on the positional relationship between the target area to be imaged by the imaging unit 130 and the imaging unit 130. In addition, when the positional relationship between the target area and the imaging unit 130 changes, the control unit 110 may control the imaging unit 130 to use the imaging unit 130 located in the area where the irradiation condition is satisfied after the change for imaging.

Furthermore, the imaging system 100 may be provided with a plurality of illumination units 120 each located at a different position, and may also be provided with a plurality of imaging units 130 each located at a different position. Then, the control unit 110 may determine, from among the plurality of illumination units 120 and the plurality of imaging units 130, the illumination unit 120 and the imaging unit 130 located in an area where the irradiation condition is satisfied, as the illumination unit 120 and the imaging unit 130 to be used to image the target object.

Next, an imaging system 100 according to a second embodiment will be described.

An imaging system 100 according to the second embodiment is common to the imaging system 100 according to the first embodiment in that the illumination unit 120 is controlled such that the positional relationship between the illumination unit 120, the imaging unit 130, and the target area satisfies the irradiation condition. On the other hand, the imaging system 100 according to the second embodiment differs from the imaging system 100 according to the first embodiment in the method of controlling the illumination unit 120 to satisfy the irradiation condition. In addition, the imaging system 100 according to the first embodiment controls the illumination unit 120 that emits terahertz waves such that terahertz waves are emitted from the illumination unit 120 among the plurality of illumination units 120 that is located at a position where the irradiation condition is satisfied. In contrast, the imaging system 100 according to the second embodiment moves the illumination unit 120 to a position where the irradiation condition is satisfied, and then emits terahertz waves from the moved illumination unit 120. In other words, in the first embodiment, the positional relationship between each illumination unit 120 and the imaging unit 130 was fixed, whereas in the second embodiment, the positional relationship between the illumination unit 120 and the imaging unit 130 is not fixed.

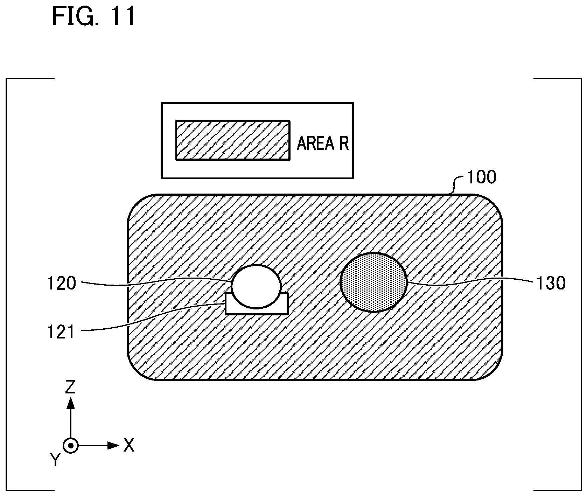

Fig. 11 is a diagram illustrating a configuration of the imaging system 100 according to the second embodiment. In addition, in the second embodiment, configurations different from those in the first embodiment will be described, and descriptions of configurations that are the same as those in the first embodiment will be omitted. The X, Y, and Z directions in Fig. 11 correspond to the X, Y, and Z directions in Figs. 5A and 5B, respectively.

As illustrated in Fig. 11, the imaging system 100 according to the second embodiment is provided with one illumination unit 120 and one imaging unit 130. In addition, the illumination unit 120 is provided with a drive unit 121 that drives the illumination unit 120, and the control unit 110 can move the illumination unit 120 within the range of an area R in the imaging system 100 by driving the drive unit 121. In this way, the illumination unit 120 can be located in an area including the periphery of the imaging unit 130 by moving in the X direction and the Z direction.

In addition, in the present embodiment, the control unit 110 manages the position of the illumination unit 120 and the position of the imaging unit 130. More specifically, the control unit 110 manages the position of the illumination unit 120 in the imaging system 100, the position of the imaging unit 130 in the imaging system 100, and the positional relationship between the illumination unit 120 and the imaging unit 130. The positional relationship between the illumination unit 120 and the imaging unit 130 also includes the distance from the illumination unit 120 to the imaging unit 130. The control unit 110 manages the position of the illumination unit 120 and the position of the imaging unit 130 by acquiring information indicating the positions of the illumination unit 120 and the imaging unit 130. Information indicating the positions of the illumination unit 120 and the imaging unit 130 may be generated by the illumination unit 120 and the imaging unit 130, or may be acquired by an acquisition unit 160 as information input by a user of the imaging system 100 and stored in a storage unit 170.

The area where the illumination unit 120 moves is not limited to the range illustrated in the drawing. The illumination unit 120 may be capable of moving in the Y direction in the imaging system 100.

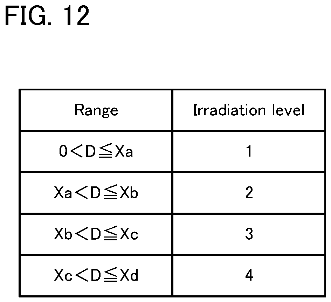

Fig. 12 is a diagram illustrating an illumination unit management table according to the second embodiment.

The illumination unit management table illustrated in Fig. 12 indicates "range" and "irradiation level."

The "range" is the range of a distance D, which is the distance from the illumination unit 120 to the imaging unit 130 when the illumination unit 120 emits terahertz waves.

The "irradiation level" shows an index indicating the intensity of light emitted by the terahertz waves emitted from the illumination unit 120.

In the illumination unit management table according to the second embodiment, the "range" and the "irradiation level" are associated with each other such that the intensity of the light emitted by the terahertz waves emitted from the illumination unit 120 increases as the distance D from the illumination unit 120 to the imaging unit 130 increases. When the control unit 110 causes the illumination unit 120 to emit terahertz waves, the control unit 110 causes the illumination unit 120 to emit terahertz waves at an "irradiation level" according to the "range" to which the distance D from the illumination unit 120 to the imaging unit 130 belongs, based on the illumination unit management table.

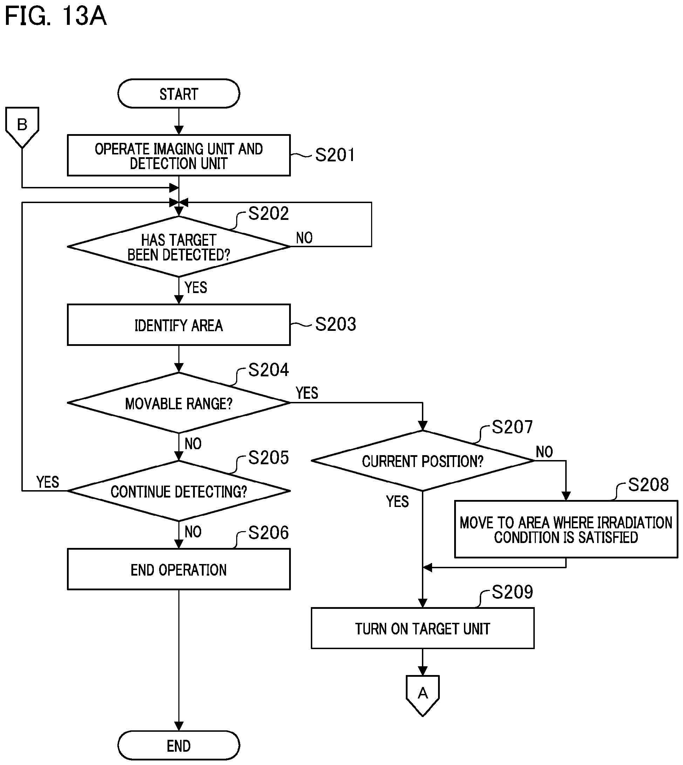

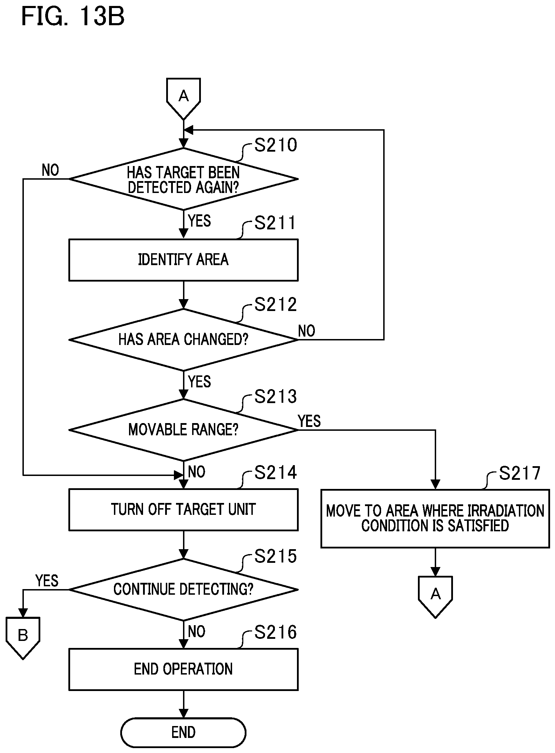

Figs. 13A and 13B are flowcharts illustrating a flow of a control process in the second embodiment.

The control unit 110 operates the imaging unit 130 and the detection unit 180 (S201), and determines whether or not the detection unit 180 has detected a target object (S202). The process in step 201 and the process in step 202 are the same as the process in step 101 and the process in step 102 in the control process illustrated in Figs. 8A and 8B, respectively. Also, while the negative result remains in step 202, the control unit 110 repeats the process of step 202.

When the control unit 110 determines that the detection unit 180 has detected a target object (Yes in S202), the control unit 110 identifies an area where the irradiation condition is satisfied as the position of the illumination unit 120, based on the positional relationship between the target object and the imaging unit 130 (S203). In other words, the control unit 110 identifies, based on the positional relationship between the target object and the imaging unit 130, in which area the illumination unit 120 has to be located in order to satisfy the irradiation condition. The control unit 110 identifies the positional relationship between the target object and the imaging unit 130 from the position of the target object detected by the detection unit 180, and identifies an area where the irradiation condition is satisfied as the position of the illumination unit 120, based on the identified positional relationship.

The control unit 110 determines whether or not the area identified as the position of the illumination unit 120 where the irradiation condition is satisfied is included in a range in which the illumination unit 120 can move (S204). More specifically, the control unit 110 makes the determination in step 204 based on whether or not the area identified in step 203 is included in the area R illustrated in Fig. 11.

When the control unit 110 determines that the area of the illumination unit 120 where the irradiation condition is satisfied is not included in the range in which the illumination unit 120 can move (No in S204), the control unit 110 determines whether or not to cause the detection unit 180 to continue detecting the target object (S205). When the control unit 110 determines not to cause the detection unit 180 to continue detecting the target object (No in S205), the control unit 110 ends the operation of the imaging unit 130 and the detection unit 180 (S206). The process in step 205 and the process in step 206 are the same as the process in step 104 and the process in step 105 in the control process illustrated in Figs. 8A and 8B, respectively.

Furthermore, when the control unit 110 determines to cause the detection unit 180 to continue detecting the target object 200 (Yes in S205), the process from S202 is performed again.

Furthermore, when the control unit 110 determines that the area of the illumination unit 120 where the irradiation condition is satisfied is included in the range in which the illumination unit 120 can move (Yes in S204), the control unit 110 proceeds to the next step.

The control unit 110 determines whether or not the area of the illumination unit 120 where the irradiation condition is satisfied is the area where the illumination unit 120 is currently located (S207).

When the control unit 110 determines that the area of the illumination unit 120 where the irradiation condition is satisfied is not the area where the illumination unit 120 is currently located (No in S207), the control unit 110 moves the illumination unit 120 to the area where the irradiation condition is satisfied (S208).

When a positive result is obtained in step 207, or after step 208, the control unit 110 turns ON the illumination unit 120, which is a target unit that satisfies the irradiation condition, to cause the illumination unit 120 to emit terahertz waves (S209). At this time, the control unit 110 causes the illumination unit 120 to emit terahertz waves at an "irradiation level" according to the "distance" from the illumination unit 120 to the imaging unit 130, based on the illumination unit management table illustrated in Fig. 12.

The control unit 110 determines whether or not the detection unit 180 has detected the target object again (S210). The process in step 210 is the same as the process in step 107 in the control process illustrated in Figs. 8A and 8B.

When the detection unit 180 has detected the target object again (Yes in S210), the control unit 110 newly identifies an area where the irradiation condition is satisfied as the position of the illumination unit 120, based on the positional relationship between the target object and the imaging unit 130 (S211).

The control unit 110 determines whether or not the area newly identified as the position of the illumination unit 120 where the irradiation condition is satisfied has changed from the area identified in step 203 (S212).

When the area of the illumination unit 120 where the irradiation condition is satisfied has not changed (No in S212), the processes from step S210 are repeated.

In addition, when the control unit 110 determines that the area of the illumination unit 120 where the irradiation condition is satisfied has changed (Yes in S212), the control unit 110 determines whether or not a new area where the irradiation condition is satisfied is included in the range in which the illumination unit 120 can move (S213).

When the control unit 110 determines that the new area where the irradiation condition is satisfied is not included in the range in which the illumination unit 120 can move (No in S213), the control unit 110 turns OFF the target unit that was turned ON in step 209 (S214). More specifically, the control unit 110 ends emission of terahertz waves by the illumination unit 120.

The control unit 110 determines whether or not to cause the detection unit 180 to continue detecting the target object (S215). When the control unit 110 determines not to cause the detection unit 180 to continue detecting the target object (No in S215), the control unit 110 ends the operation of the imaging unit 130 and the detection unit 180 (S216), and the control process ends. The process in step 215 and the process in step 216 are the same as the process in step 205 and the process in step 206, respectively.

Furthermore, when the control unit 110 determines to cause the detection unit 180 to continue detecting the target object (Yes in S215), the process from S202 is performed again.

Furthermore, when the control unit 110 determines that the new area where the irradiation condition is satisfied is included in the range in which the illumination unit 120 can move (Yes in S213), the control unit 110 moves the illumination unit 120 to a new area where the irradiation condition is satisfied (S217). In this way, even when the positional relationship between the illumination unit 120 and the imaging unit 130 no longer satisfies the irradiation conditions due to a change in the area of the illumination unit 120 where the irradiation condition is satisfied (see S212), the illumination unit 120 moves to a new area where the irradiation condition is satisfied.

After this, the processes from step 210 are repeated.

As described above, in the present embodiment, the control unit 110 moves the illumination unit 120 such that the positional relationship between the illumination unit 120 and the imaging unit 130 satisfies the irradiation conditions, depending on the positional relationship between the target area to be imaged by the imaging unit 130 and the imaging unit 130. With this configuration, even if the positional relationship between the illumination unit 120, the imaging unit 130, and the target area is not the same each time imaging is performed, it is possible to realize imaging under a positional relationship that satisfies the irradiation condition between the illumination unit 120 that irradiates the target area and the imaging unit 130 that images the target area.

In addition, when the positional relationship between the target area and the imaging unit 130 changes, the control unit 110 controls the illumination unit 120 such that the irradiation condition is satisfied after the change (see steps 212 to 217 in Fig. 13B).

In addition, when the positional relationship between the illumination unit 120 and the imaging unit 130 does not satisfy the irradiation condition, the control unit 110 controls a specific illumination unit 120 such that the positional relationship between the specific illumination unit 120 that has not irradiated the target area and the imaging unit 130 satisfies the irradiation condition. Here, the "specific illumination unit 120 that has not irradiated the target area" also includes, in the case where the target area changes (see S212), the illumination unit 120 that was irradiating the target area with terahertz waves before the change.

In the present embodiment, the configuration for realizing emission of terahertz waves from the illumination unit 120 under a positional relationship between the illumination unit 120 and the imaging unit 130 that satisfies the irradiation condition is not limited to the above-mentioned example.

In the imaging system 100, the imaging unit 130 may be provided to be movable. In this case, the control unit 110 identifies an area where the irradiation condition is satisfied as the position of the imaging unit 130 based on the positional relationship between the illumination unit 120 and the target area, moves the imaging unit 130 to the identified area, and then causes the illumination unit 120 to emit terahertz waves. In this way, the control unit 110 may move the imaging unit 130 such that the positional relationship between the illumination unit 120 and the imaging unit 130 satisfies the irradiation conditions, depending on the positional relationship between the target area to be imaged by the imaging unit 130 and the imaging unit 130.

In addition, both the illumination unit 120 and the imaging unit 130 may be movable. In this case, the control unit 110 identifies an area where the irradiation condition is satisfied as the position of the illumination unit 120 and the position of the imaging unit 130 based on the target area, moves the illumination unit 120 and the imaging unit 130 to the identified area, and then causes the illumination unit 120 to emit terahertz waves.

In addition, in the present embodiment, the control unit 110 identifies the positional relationship between the target object and the imaging unit 130 based on the position of the target object detected by the detection unit 180, but the present invention is not limited thereto. The detection unit 180 may detect the position of the target object, and based on the detection result, identify the positional relationship between the target object and the imaging unit 130, and transmit information indicating the identified positional relationship to the control unit 110.

In addition, in the first and second embodiments, it has been described that the irradiation condition is the positional relationship between the illumination unit 120 and the imaging unit 130 in which the terahertz waves emitted from the illumination unit 120 and reflected by the target object are incident on the detection device of the imaging unit 130, but the present invention is not limited thereto. For example, the irradiation condition may be the positional relationship between the illumination unit 120 and the imaging unit 130 in which the terahertz waves emitted from the illumination unit 120 and reflected by the target object are incident on a predetermined range from the detection device of the imaging unit 130. The predetermined range may be any range, but is, for example, a range with a radius of 10 cm centered on the detection device.

Furthermore, the imaging system 100 according to the first and second embodiments has been described as having a configuration including the holding unit 210, but the present invention is not limited thereto.

The imaging system 100 may be configured without the holding unit 210 and may be fixed to a predetermined location. In this case, the imaging system 100 may be a surveillance camera that controls the illumination unit 120 and the imaging unit 130 such that the irradiation condition is satisfied according to the positional relationship between a moving target object such as a person and the imaging unit 130.

Furthermore, the imaging system 100 according to the first and second embodiments may be a mobile-mounted camera mounted on a mobile object such as a car or a drone. Furthermore, the imaging system 100 may be a wearable camera mounted on an object worn by a person, such as a head mounted display (HMD) or smart glasses. In this way, even when the imaging system 100 moves, the imaging system 100 may control the illumination unit 120 and the imaging unit 130 such that the irradiation condition is satisfied according to the positional relationship between the target area and the imaging unit 130.

Furthermore, the imaging system 100 according to the first and second embodiments is configured such that the position of the target object is identified by the detection unit 180, but the present invention is not limited thereto.

Information indicating the position of the target object may be transmitted to the imaging system 100, acquired by the acquisition unit 160, and then stored in the storage unit 170. Then, the control unit 110 may identify the position of the target object from the information stored in the storage unit 170.

Further, the illumination unit 120 of the present embodiment has been described as emitting terahertz waves, but the present invention is not limited thereto. The illumination unit 120 may emit light of a frequency different from the terahertz wave. Even in this case, the control unit 110 may control the illumination unit 120 and the imaging unit 130 such that the irradiation condition is satisfied according to the positional relationship between the target object and the imaging unit 130.

Embodiments of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiments and/or that includes one or more circuits (e.g., application specific integrated circuit (ASIC)) for performing the functions of one or more of the above-described embodiments, and by a method performed by the computer of the system or apparatus by, for example, reading out and executing the computer executable instructions from the storage medium to perform the functions of one or more of the above-described embodiments and/or controlling the one or more circuits to perform the functions of one or more of the above-described embodiments. The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

This application claims the benefit of Japanese Patent Application No. 2024-41952, filed March 18 2024, which is hereby incorporated by reference wherein in its entirety.

## Claims

1. An imaging system (100) comprising:
an illumination unit (120) configured to emit terahertz waves;
an imaging unit (130) configured to image a subject irradiated with the terahertz waves; and
a control unit (110) configured to control the illumination unit or the imaging unit such that a positional relationship between the illumination unit that irradiates a target area to be imaged by the imaging unit and the imaging unit that images the target area satisfies a predetermined condition, depending on a positional relationship between the target area and the imaging unit.

2. The imaging system according to claim 1,
wherein the illumination unit includes a plurality of illumination units at different positions, and
the control unit causes an illumination unit among the plurality of illumination units that is located at a position where the condition is satisfied to irradiate the target area.

3. The imaging system according to claim 2,
wherein the plurality of illumination units include a first illumination unit whose distance to the imaging unit is a first distance and a second illumination unit whose distance to the imaging unit is longer than the first distance,
the target area includes a first target area whose distance to the imaging unit is a second distance and a second target area whose distance to the imaging unit is longer than the second distance, and
the control unit causes the first illumination unit to emit terahertz waves when the target area is the first target area, and causes the second illumination unit to emit terahertz waves when the target area is the second target area.

4. The imaging system according to any one of claims 1 to 3,
wherein the target area includes a first target area and a second target area whose distance to the imaging unit is longer than the first target area, and
the control unit controls an intensity of light emitted by the terahertz waves to be higher when the illumination unit irradiates the second target area with the terahertz waves than when the illumination unit irradiates the first target area with the terahertz waves.

5. The imaging system according to claim 2,
wherein the plurality of illumination units and the imaging unit are provided along one direction.

6. The imaging system according to claim 2,
wherein the plurality of illumination units include a first illumination unit and a second illumination unit, and
the second illumination unit is provided at a position different from a straight line passing through the first illumination unit and the imaging unit.

7. The imaging system according to claim 2,
wherein each of the plurality of illumination units belongs to any one of a plurality of groups divided according to a distance from the imaging unit to the illumination unit, and
the control unit causes the illumination units belonging to the group among the plurality of groups that is located at a position where the condition is satisfied to emit terahertz waves.

8. The imaging system according to any one of claims 1 to 7,
wherein, when the positional relationship between the target area and the imaging unit changes, the control unit controls the illumination unit or the imaging unit such that the condition is satisfied after the change.

9. The imaging system according to any one of claims 1 to 8,
wherein the illumination unit includes one or more illumination units, and
when a positional relationship between at least one illumination unit and the imaging unit does not satisfy the condition, the control unit controls a specific illumination unit that has not irradiated the target area such that a positional relationship between the specific illumination unit and the imaging unit satisfies the condition.

10. A control method for an imaging system including an illumination unit that emits terahertz waves, an imaging unit that images a subject, and a control unit that controls the illumination unit or the imaging unit, the control method comprising:
controlling the illumination unit or the imaging unit such that a positional relationship between the illumination unit that irradiates a target area to be imaged by the imaging unit and the imaging unit that images the target area satisfies a predetermined condition, depending on a positional relationship between the target area and the imaging unit.

11. A program causing a computer to execute the method according to claim 10.
